# EUROPEAN PATENT APPLICATION

(11) **EP 4 383 216 A1**
(43) Date of publication of application: **12.06.2024**
(21) Application number: 22212034.7
(22) Date of filing: 07.12.2022
(51) Int. Cl.: G06V 20/58, B60Q 1/14, G06V 20/56

(54) **METHODS AND APPARATUSES FOR ADAPTIVE HIGH BEAM CONTROL FOR A VEHICLE**

(71) Applicant: Zenseact AB, 417 56 Göteborg (SE)
(72) Inventor: FU, Junsheng, 449 35 Nödinge (SE); EKMARK, Jonas, 424 70 Olofstorp (SE)
(74) Representative: Zacco Sweden AB

(57) **Abstract**

A computer-implemented method and related aspects for adaptive high beam control for a vehicle are disclosed. The method comprises obtaining a pose of the vehicle, the pose being indicative of the vehicle's position and orientation on a road. The method further comprises obtaining a Three-Dimensional (3D) road model of a surrounding environment of the vehicle based on High-Definition (HD) map data and the determined vehicle pose. Furthermore, the method comprises generating a 3D region of interest (3D-ROI) in the form of voxels defining a volume along the obtained 3D road model. The method further comprises forming a dataset for processing by an Adaptive High Beam Control (AHBC) unit configured to adaptively control an illumination of a space in front of the vehicle by controlling an illumination of one or more headlights of the vehicle. The formed dataset is based on the generated 3D-ROI and perception data indicative of one or more detected road users in the surrounding environment of the vehicle. The perception data is based on sensor data obtained from one or more sensors for monitoring a surrounding environment of the vehicle. Furthermore, the method comprises transmitting the formed dataset to the AHBC unit so to control the illumination of the space in front of the vehicle based on the formed dataset so to avoid casting high beam illumination towards road users detected within the 3D-ROI.

## Description

### TECHNICAL FIELD

The disclosed technology generally relates to the field of automotive technology, and in particular to computer-implemented methods and apparatuses for adaptive high beam control for a vehicle.

### BACKGROUND

During the last few years, the research and development activities related to autonomous vehicles have exploded in number, and many different approaches are being explored. An increasing portion of modern vehicles have advanced driver-assistance systems (ADAS) to increase vehicle safety and more generally road safety. ADAS - which for instance may be represented by adaptive cruise control (ACC), collision avoidance systems, forward collision warning systems, etc. - are electronic systems that may aid a vehicle driver while driving. Today, there is ongoing research and development within a number of technical areas associated to both the ADAS and Autonomous Driving (AD) field.

Modern road vehicles have two general light settings for the vehicle's headlights, high beam (sometimes referred to as "main beam", "brights", or "full beam") and low beam (sometimes referred to as "dipped"). Low beam headlights illuminates an area in front of the vehicle and allows for visibility for up to a distance of approximately 50 meters, while high beam headlights may illuminate an area in front of the vehicle and allows for visibility for up to a distance of 100 meters or more.

Therefore, high beam illumination may be crucial for safely manoeuvring a vehicle in low-light conditions in order to reduce the risk of unpleasant incidents or accidents due to collisions with other objects or accidental departure from the road, particularly when traveling at high speeds. However, due to the fact that high beam provides long range illumination, the driver has to be conscious of other road users such as e.g. oncoming vehicles, closely leading vehicles, pedestrians or cyclists, so to not blind other road users, and turn off the high beam illumination when appropriate. Furthermore, high beam illumination may also provide discomfort to the driver of the "ego-vehicle" when the lights reflect from objects along the road, such as road signs, barriers, etc.

To this end, many modern vehicles are provided with automatic high beam control (may also be referred to as active high beam control), which automatically detects light sources in front of the vehicle (e.g. using one or more Light Dependent Resistors), and then automatically switches between high beam and low beam depending on the intensity of the detect light sources. Moreover, some modern vehicles are equipped with headlights having LED matrices that implement Adaptive High Beam Control (AHBC), which uses an automatic switching technology to control the individual LEDs to shine less light on certain areas (where external light sources are detected) and more light on other areas (where no external light sources are detected). As a result, the automation of high beam control may relieve the driver from having to switch repeatedly between high beam and low beam.

However, there is still a need for improvements in the art of automated high beam control, and in particular there is a need in the art for new and improved methods that reduce "false positives" that cause the vehicle to unnecessarily turn off the high beam illumination in order to improve traffic safety.

### SUMMARY

The herein disclosed technology seeks to mitigate, alleviate or eliminate one or more deficiencies and disadvantages in the prior art to address various problems relating to erroneous automatic activation or deactivation of high beam illumination or partial high beam illumination of a vehicle.

Various aspects and embodiments of the disclosed invention are defined below and in the accompanying independent and dependent claims.

A first aspect of the disclosed technology comprises a computer-implemented method for adaptive high beam control for a vehicle. The method comprises obtaining a pose of the vehicle, the pose being indicative of the vehicle's position and orientation on a road. The method further comprises obtaining a Three-Dimensional (3D) road model of a surrounding environment of the vehicle based on High-Definition (HD) map data and the determined vehicle pose. Furthermore, the method comprises generating a 3D region of interest (3D-ROI) in the form of voxels defining a volume along the obtained 3D road model. The method further comprises forming a dataset for processing by an Adaptive High Beam Control (AHBC) unit configured to adaptively control an illumination of a space in front of the vehicle by controlling an illumination of one or more headlights of the vehicle. The formed dataset is based on the generated 3D-ROI and perception data indicative of one or more detected road users in the surrounding environment of the vehicle. The perception data is based on sensor data obtained from one or more sensors for monitoring a surrounding environment of the vehicle. Furthermore, the method comprises transmitting the formed dataset to the AHBC unit so to control the illumination of the space in front of the vehicle based on the formed dataset so to avoid casting high beam illumination towards road users detected within the 3D-ROI.

A second aspect of the disclosed technology comprises a computer program product comprising instructions which, when the program is executed by a computing device of a vehicle, causes the computing device to carry out the method according to any one of the embodiments disclosed herein. With this aspect of the disclosed technology, similar advantages and preferred features are present as in the other aspects.

A third aspect of the disclosed technology comprises a (non-transitory) computer-readable storage medium comprising instructions which, when executed by a computing device of a vehicle, causes the computing device to carry out the method according to any one of the embodiments disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

A fourth aspect of the disclosed technology comprises an apparatus for adaptive high beam control for a vehicle. The apparatus comprises control circuitry configured to obtain a pose of the vehicle, the pose being indicative of the vehicle's position and orientation on a road. The control circuitry is further configured to obtain a Three-Dimensional (3D) road model of a surrounding environment of the vehicle based on High-Definition (HD) map data and the determined vehicle pose. Furthermore, the control circuitry is configured to generate a 3D region of interest (3D-ROI) in the form of voxels defining a volume along the obtained 3D road model. The control circuitry is further configured to form a dataset for processing by an Adaptive High Beam Control (AHBC) unit configured to adaptively control an illumination of a space in front of the vehicle by controlling an illumination of one or more headlights of the vehicle. The formed dataset is based on the generated 3D-ROI and perception data indicative of one or more detected road users in the surrounding environment of the vehicle. The perception data is based on sensor data obtained from one or more sensors for monitoring a surrounding environment of the vehicle. Furthermore, the control circuitry is configured to transmit the formed dataset to the AHBC unit so to control the illumination of the space in front of the vehicle based on the formed dataset so to avoid casting high beam illumination towards road users detected within the 3D-ROI. With this aspect of the disclosed technology, similar advantages and preferred features are present as in the other aspects.

A fifth aspect of the disclosed technology comprises vehicle comprising an apparatus for adaptive high beam control for the vehicle according to any one of the embodiments disclosed herein. With this aspect of the disclosed technology, similar advantages and preferred features are present as in the other aspects.

The disclosed aspects and exemplified embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is the performance of the AHBC unit may be improved by reducing a risk of generating false positives that cause the AHBC unit to unnecessarily turn off the high beam illumination.

An advantage of some embodiments is that the automatic illumination of the forward roadway for the driver may be improved due to less erroneous switching to low beam, thereby improving overall road safety.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 is a schematic flowchart representation of a method for adaptive high beam control for a vehicle in accordance with some embodiments.
Fig. 2 is a schematic illustration of a 3D road model in accordance with some embodiments.
Fig. 3 is a schematic illustration of a 3D Region of Interest (3D-ROI) for the 3D road model of Fig. 2, in accordance with some embodiments.
Fig. 4 is a schematic perspective view illustration of a vehicle employing adaptive high beam control in accordance with some embodiments.
Fig. 5a is a schematic top-view illustration of a 3D-ROI in accordance with some embodiments.
Fig. 5b is a schematic side-view illustration of a 3D-ROI in accordance with some embodiments.
Fig. 6a is a schematic top-view illustration of a 3D-ROI in accordance with some embodiments.
Fig. 6b is a schematic side-view illustration of a 3D-ROI in accordance with some embodiments.
Fig. 7a is a schematic top-view illustration of a 3D-ROI in the form of voxels in accordance with some embodiments.
Fig. 7b is a schematic side-view illustration of a 3D-ROI in the form of voxels in accordance with some embodiments.
Fig. 8a is a schematic top-view illustration of a 3D-ROI in the form of voxels in accordance with some embodiments.
Fig. 8b is a schematic side-view illustration of a 3D-ROI in the form of voxels in accordance with some embodiments.
Fig. 9a is a schematic top-view illustration of a 3D-ROI in the form of voxels in accordance with some embodiments.
Fig. 9b is a schematic side-view illustration of a 3D-ROI in the form of voxels in accordance with some embodiments.
Fig. 10a is a schematic top-view illustration of a 3D-ROI in the form of voxels in accordance with some embodiments.
Fig. 10b is a schematic side-view illustration of a 3D-ROI in the form of voxels in accordance with some embodiments.
Fig. 11 is a schematic block diagram representation of a vehicle comprising an apparatus for adaptive high beam control in accordance with some embodiments.
Fig. 12a is a schematic block diagram representation of an apparatus for adaptive high beam control in accordance with some embodiments.
Fig. 12b is a schematic block diagram representation of an apparatus for adaptive high beam control in accordance with some embodiments.
Fig. 12c is a schematic block diagram representation of an apparatus for adaptive high beam control in accordance with some embodiments.
Figs. 13a-13d are a schematic illustration of example scenarios that are challenging to appropriately handle for a conventional Adaptive High Beam Control (AHBC) unit.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

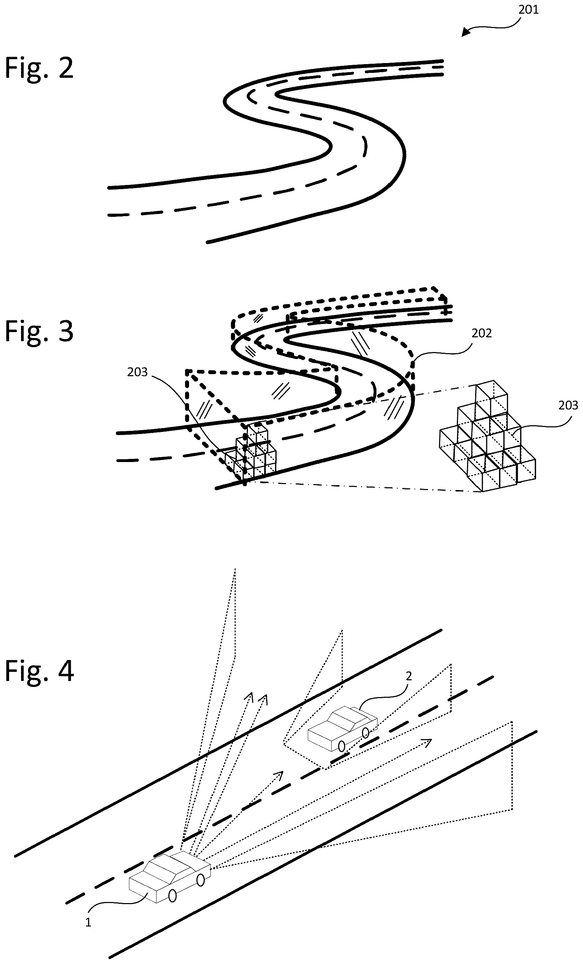

In general, Adaptive High Beam Control (AHBC) automatically controls the forward lighting (i.e. the headlights) of the vehicle, in particular during nighttime driving. The AHBC may be said to have two main goals, to Illuminate the forward roadway as well as possible for the driver of the ego-vehicle (may also be referred to as host vehicle), and to avoid blinding other road users by inappropriate activation of high beam illumination. Similar to automatic high beam control, the AHBC relies on input from one or more Light Dependent Resistors (LDRs) - may also be referred to as photoresistors - for detecting any light sources in front of the ego-vehicle in order to control the illumination of the roadway in front of the ego-vehicle. The general configuration is that the AHBC should avoid high beam illumination towards the detected light sources. The LDR(s) may for example be arranged at the top of the windshield as part of the rear view mirror assembly together with other sensors such as forward facing cameras, rain sensors, etc. Some AHBC units/systems may use the output from forward facing cameras arranged on the ego-vehicle to detect light sources in front of the vehicle. Fig. 4 is a schematic perspective view of an ego-vehicle 1 having an AHBC unit where the illumination from the ego-vehicle's headlights is adaptively controlled so to illuminate the area in front of the ego-vehicle 1 using high-beam illumination while avoiding high-beam illumination towards other road users 2 detected in front of the ego-vehicle. The illumination from the headlights of the ego-vehicle 1 is schematically indicated by the dashed arrows and dashed lines extending from the ego-vehicle 1 in Fig. 4.

Accordingly, some AHBC units react to bright spots detected in the images that are output from the forward facing camera, and assume that the bright spots are headlights of other oncoming vehicles or taillights of leading vehicles. However, a common problem is that some of the detected bright spots may be coming from stationary lights used for other purposes. For example, from outdoor lighting near a house or building, lights arranged on windmills, lights arranged on advertisement boards, or lights arranged on radio base stations. Thus, a conventional AHBC unit may interpret these bright spots originating from stationary lights, as lights originating from other road users and therefore reduce the forward illumination from the ego-vehicle erroneously, resulting in a sub-optimal performance of the AHBC unit.

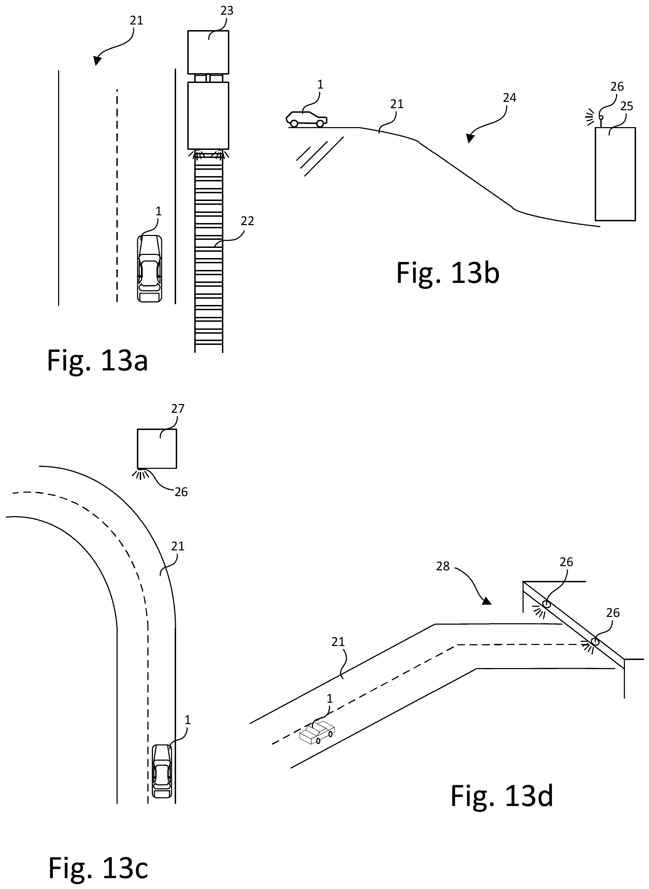

Some examples of situations or scenarios that are challenging for a general AHBC unit are schematically depicted in Figs. 13a-13d. In more detail, Fig. 13a schematically illustrates a scenario when the ego-vehicle 1 is driving on a roadway 21 (e.g. a highway) and there is a passing train 23 on a train track 22 or railroad 22 close to the roadway 21, potentially running parallel with the roadway 21. Here, conventional AHBC units may incorrectly assume that the lights coming from the train 23 are lights coming from another road user and therefore erroneously switch to low beam illumination or partial low beam illumination.

Fig. 13b schematically illustrates a scenario when the ego-vehicle 1 is driving on a roadway 21 and is approaching a downhill portion 24 of the road and there is a light source 26 on top of a tall structure (e.g. building or radio base station) 25 located at the bottom of the downhill portion 24. Here, conventional AHBC units may incorrectly assume that the light source 26 is coming from another road user since the light is detected straight in front of the vehicle (i.e. originating just above the horizon from the ego-vehicle's point of view) and therefore erroneously switch to low beam illumination or partial low beam illumination.

Fig. 13c schematically illustrates a scenario when the ego-vehicle 1 is approaching a turn portion of the roadway 21, here in the form of a left turn, and there is a stationary structure 27 with a light 26 on the side of the road. Here, conventional AHBC units may incorrectly assume that the lights are coming from another road user and therefore erroneously switch to low beam illumination or partial low beam illumination.

Fig. 13d schematically illustrates a scenario when the ego-vehicle 1 is approaching a downhill portion of the roadway 21 that leads into a tunnel 26, which has some lights 26 arranged on the top portion of the tunnel entrance. Here, conventional AHBC units may incorrectly assume that the lights are coming from another road user and therefore erroneously switch to low beam illumination or partial low beam illumination.

In order to mitigate some of the drawbacks of presently known solutions for AHBC, and in particular to better handle more of these challenging scenarios, the herein disclosed technology utilizes a 3D road model of the road that the ego-vehicle is traveling upon in order to generate a 3D Region of Interest (3D-ROI). The 3D-ROI is generated in the form of voxels that define a volume along the 3D road model. This 3D-ROI is then used to infer "relevant" road users that are to be accounted for by the AHBC unit when deciding upon whether or not to illuminate certain portions of the roadway in front of the ego-vehicle. In other words, the 3D-ROI is used to differentiate between "relevant" light sources or objects and "irrelevant" light sources or objects that are detected by the ego-vehicle's sensors for improving the performance of the AHBC unit.

Accordingly, by using the 3D-ROI, one can improve the detection accuracy for relevant road users. For example, any bright spots originating from outside of the 3D-ROI, may be concluded as emitted from something else than a "relevant" road user. Thereby, the situations or scenarios in which the AHBC would erroneously reduce the headlight illumination (such as the ones illustrated in Figs. 13a-13d) could be made less frequent. In other words, an advantage of some embodiments is that the risk of false-positives occurring in adaptive high beam control is reduced.

In the context of the present disclosure, the term "3D road model" may be understood as a virtual 3D representation of a road, which may be obtained from map data, and in particular High Definition map data (HD Map data). Fig. 2 is a schematic illustration of a 3D road model 201 in accordance with some embodiments. The 3D road model 201 may accordingly be understood as data describing the spatial geometry of the road (including any lane markers, road boundaries, barriers, sidewalks, etc.) in the surrounding environment of the vehicle. The term "spatial geometry" may be understood as the structure of spatial objects in terms of points, lines, polygons, polylines, and so forth.

For the purpose of the present disclosure, the term "voxel" may be understood as each of an array of elements of volume that constitute a notional three-dimensional space, and in particular, each of an array of discrete elements into which a representation of a three-dimensional object is divided. In general, a voxel represents a value on a regular grid in three-dimensional space, i.e. a voxel may be understood as a unit of graphic information that defines a point in three-dimensional space. For example, a pixel (picture element) defines a point in two-dimensional space e.g. with its X and Y coordinates, a voxel accordingly defines a point in a three dimensional space e.g. with its X, Y, and Z coordinates. It should be noted that the voxels need not be represented in a Cartesian coordinate system, but that other coordinate systems are applicable such as e.g. a spherical coordinate system.

In the context of the present disclosure, the term "3D-ROI" may be understood as a defined volume extending along a road portion or road segment in front of the ego-vehicle. Fig. 3 is a schematic illustration of a 3D-ROI 202 in the form of a set of voxels 203 for the road portion represented by the 3D road model 201 in Fig. 2. It should be noted that only a few voxels 203 are depicted in Fig. 3 to more clearly elucidate the volume defining the 3D-ROI 202, and to avoid cluttering of the drawings. However, as readily understood by the skilled reader, the entire volume of the 3D-ROI 202 is defined by voxels 203.

Accordingly, the 3D-ROI may be understood as a set of voxels that define a volume extending vertically above and along a road segment in front of the vehicle. The height of the 3D-ROI 202 may be defined so to encompass any vehicles that may appear on a road (e.g. cars, busses, trucks, construction vehicles, etc.). Thus, in some embodiments, the height, or the vertical extension of the 3D-ROI 202 is the same as a predefined height restriction for vehicles for the road upon which the ego-vehicle is traveling. In other words, in some embodiments, the height, or the vertical extension of the 3D-ROI 202 corresponds to the height of the tallest vehicle that is expected to travel on the road. The lateral extension (i.e. along the width direction of the road) of the 3D-ROI 202 may be defined on basis of the type of the road, and may be limited to a boundary of the roadway. However, in some embodiments, the lateral extension of the 3D-ROI may extend past the roadway and for example encompass a bike lane and/or a sidewalk along the roadway. The longitudinal extension (i.e. along the travel direction of the road) of the 3D-ROI may be limited by an illumination range of the ego-vehicle's beams, a sensor range of the vehicle's perception system, or be predefined to a suitable distance such as e.g. 100m, 200m, 300m, 400m, 500m, up to 1000m from the ego-vehicle.

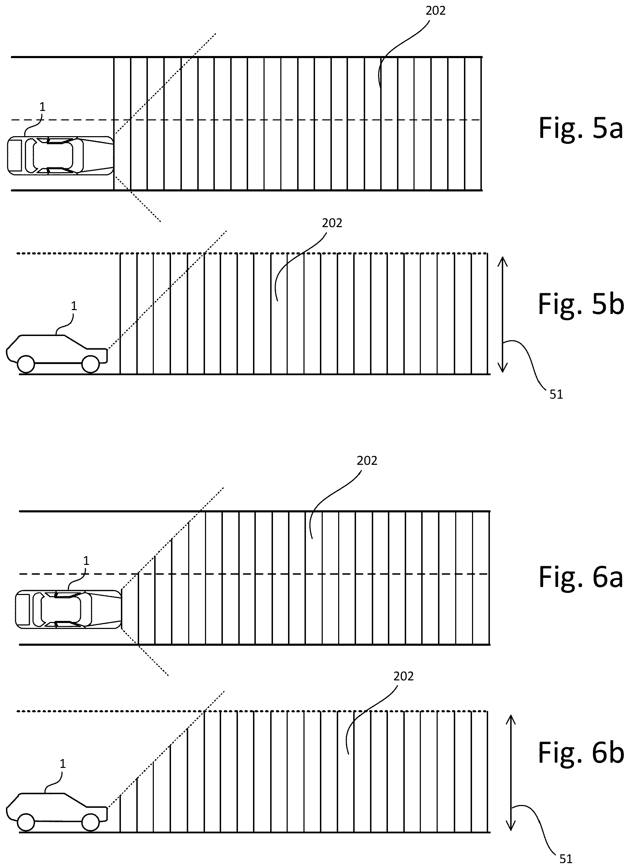

Figs. 5a and 5b are schematic top-view and side-view illustrations, respectively, of the 3D-ROI 202 for a road segment in accordance with some embodiments. Here, the "lined" portion of the road segment in front of the ego-vehicle 1 schematically indicates the 3D-ROI 202, and the double-headed arrow 51 indicates the height (or vertical extension) of the 3D-ROI 202. As mentioned, the height 51 of the 3D-ROI may be set in accordance with a height restriction for vehicles for the road segment. This allows the 3D-ROI 202 to encompass vehicles of any height that are likely to appear on the road segment.

Figs. 6a and 6b are schematic top-view and side-view illustrations, respectively, of the 3D-ROI 202 for a road segment in accordance with some embodiments. In contrast to 3D-ROI 202 depicted in Figs. 5a and 5b, the shape of the 3D-ROI in the area closest to the ego-vehicle is arranged so to align with the light beam angles of the ego-vehicle's headlights. In other words, in some embodiments, the generated 3D-ROI is shaped so to only encompass parts of the 3D road model and the space above those parts, up until the predefined height of the 3D-ROI, which can be illuminated by the ego-vehicle's headlights. Thus, the generated 3D-ROI only covers the parts of the road segment that can actually be illuminated by the ego-vehicle's 1 headlights and less data and processing resources may be needed to generate the 3D-ROI as compared to if the 3D-ROI encompassed a space that could not even be illuminated by the vehicle's 1 headlights.

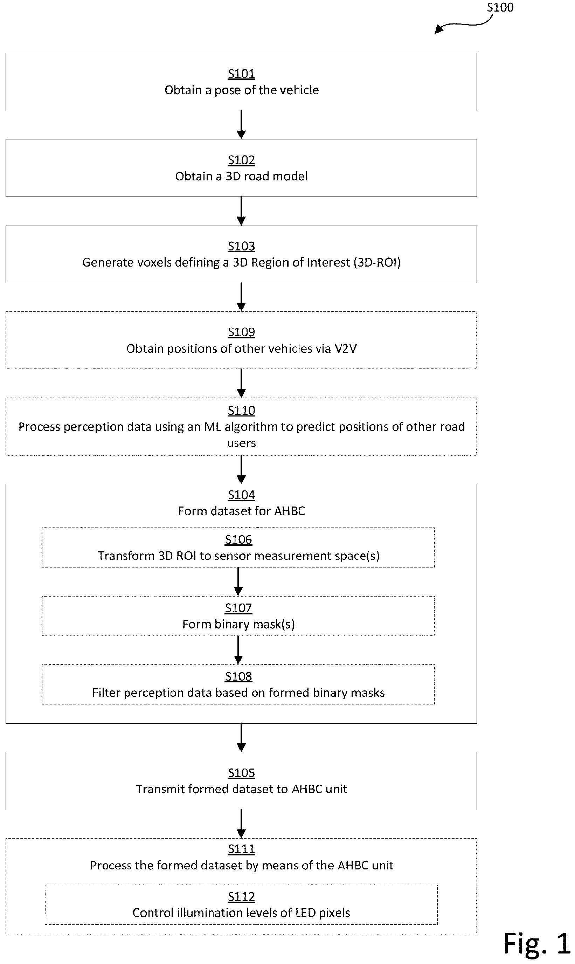

Fig. 1 is a schematic flowchart representation of a method S100 for adaptive high beam control for a vehicle. The method S100 is preferably a computer-implemented method S100, performed by a processing system of the vehicle. The processing system may for example comprise one or more processors and one or more memories coupled to the one or more processors, wherein the one or more memories store one or more programs that perform the steps, services and functions of the method S100 disclosed herein when executed by the one or more processors.

The method S100 comprises obtaining S100 a pose of the vehicle. The pose of the vehicle is indicative of the vehicle's position and orientation on a road. Accordingly, the pose of the vehicle may comprise the vehicle's geographical position and orientation (e.g. yaw angle). The yaw angle may be expressed in relation to the longitudinal extension of the road that the vehicle is located upon or in relation to a global reference. Geographical position of a vehicle is in the present context to be construed as a map position (may also be referred to as in-map position) of the vehicle. In other words, a geographical position or map position can be understood as a set (two or more) of coordinates in a global coordinate system.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. In other words, obtaining a pose of the vehicle may encompass determining or computing a pose of the vehicle based on e.g. GNSS data and/or perception data together with map data. Thus, as used herein, "obtaining" may indicate that a parameter is received at a first entity/unit from a second entity/unit, or that the parameter is determined at the first entity/unit e.g. based on data received from another entity/unit.

In some embodiments the obtaining S101 of the pose of the vehicle comprises comparing perception data (e.g. sensor data) with map data (e.g. HD map data) in order to derive a pose of the vehicle on the road segment in the map. In more detail, the perception data comprises the position of one or more static landmarks in the surrounding environment of the vehicle, wherein the positions are defined in relative to the vehicle. The HD map data comprises the position of the one or more static landmarks in the map. Thus, the pose of the vehicle can be derived by comparing the positions of the static landmarks relative to the vehicle with the positions of the static landmarks in the map.

The method S100 further comprises obtaining S102 a Three-Dimensional (3D) road model of a surrounding environment of the vehicle based on map data (e.g. HD map data) and the determined vehicle pose (see e.g. Fig. 3). For the purpose of the present disclosure, the surrounding environment of a vehicle may be understood as a general area around the vehicle in which objects (such as other vehicles, landmarks, obstacles, etc.) can be detected and identified by the vehicle's perception system, i.e. within a sensor range of the ego-vehicle.

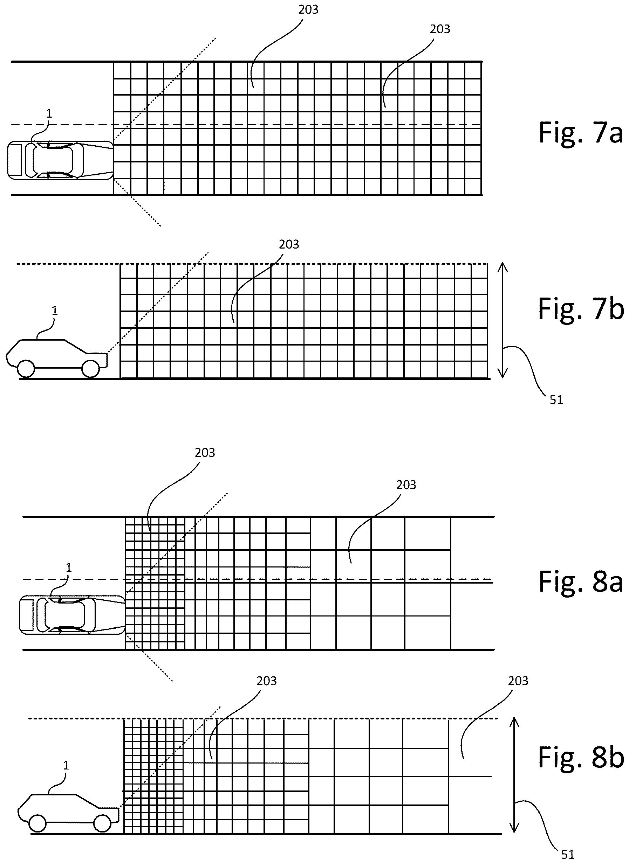

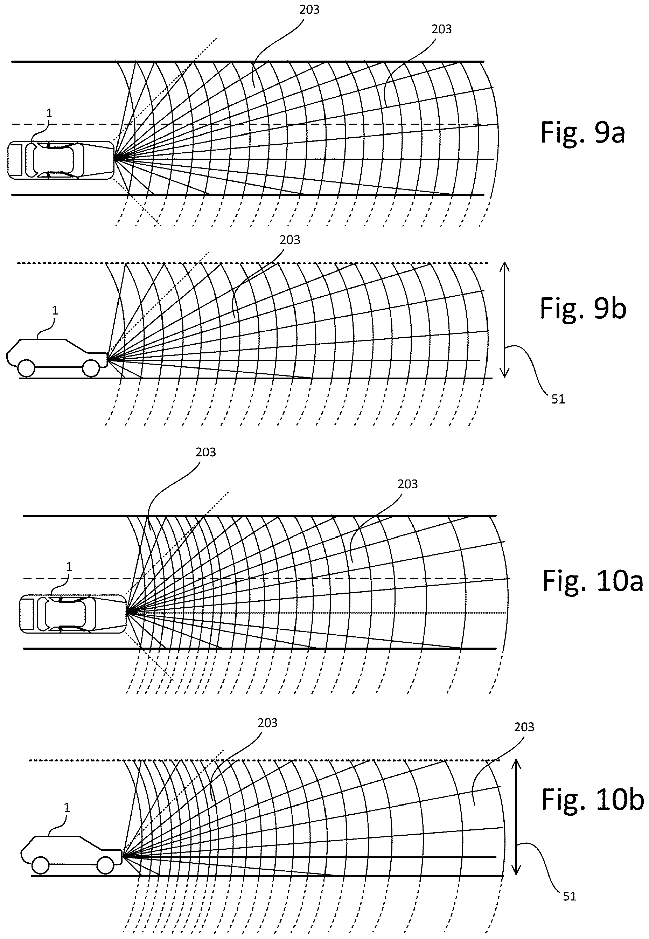

Further, the method S100 comprises generating S103 a 3D region of interest (3D-ROI) in the form of voxels defining a volume along the obtained 3D road model (see e.g. Fig. 4). In some embodiments, the voxels 203 are in the form of 3D-shapes such as polyhedrons (e.g. cubes), expressed in a Cartesian coordinate system as illustrated in Figs. 7a, 7b, 8a, and 8b. In some embodiments, the voxels 203 are in the form of 3D-shapes expressed in a Spherical coordinate system as illustrated in Figs. 9a, 9b, 10a, and 10b.

In some embodiments, the voxels 203 are of uniform size and shape throughout the 3D-ROI 202, as for example indicated in Figs. 7a, 7b, 9a, and 9b. However, in some embodiments the voxels 203 of the 3D-ROI may have different sizes and/or shapes throughout the 3D-ROI. In particular, in some embodiments, the voxels 203 are finer (or more dense) in a portion of the 3D-ROI close to the ego-vehicle 1 than a portion of the 3D-ROI further away from the ego-vehicle 1, as for example indicated in Figs 8a, 8b, 10a, and 10b. Thereby, a more computationally efficient solution for generating the 3D-ROI may be provided with negligible effect on the performance of the AHBC unit. The "fine-to-coarse" (or "dense-to-sparse") voxel distribution within the 3D-ROI may be continuous or split in different sectors (e.g. close-range, mid-range, and far-range). In reference to the latter, the close-range sector of the 3D-ROI accordingly has the finest voxel resolution, while the far-range sector of the 3D-ROI has the coarsest voxel resolution.

The method S100 further comprises forming S104 a dataset for processing by an Adaptive High Beam Control (AHBC) unit. The AHBC unit is configured to adaptively control an illumination of a space in front of the vehicle by controlling an illumination of one or more headlights of the vehicle. The formed dataset is based on the generated 3D-ROI and perception data indicative of one or more detected road users in the surrounding environment of the vehicle. The perception data is based on sensor data obtained from one or more sensor configured to monitor a surrounding environment of the vehicle.

Thus, in some embodiment the method S100 may further comprise obtaining perception data indicative of one or more detected road users in the surrounding environment of the vehicle. The perception data may for example be received or retrieved from a perception system of the vehicle.

The term "perception data" should in the present context be interpreted broadly and includes both classic "perception" (e.g. object detection/classification, object tracking) as well as "predictions" of future states or trajectories of external objects. Moreover, in some embodiments, "perception data" comprises processed sensor data (e.g. processed images as output by one or more vehicle-mounted cameras, processed RADAR output, and/or processed LIDAR output). For example, the perception data may comprise an output from an object detection algorithm, an object classification algorithm and/or an image segmentation algorithm. In some embodiments, the perception data comprises one or more camera images (that may include data or labels indicate of objects detected in the image), data indicative of camera blockages/obstructions, and/or data indicative of road users detected by a vehicle-mounted RADAR and/or a vehicle-mounted LIDAR.

The method S100 further comprises transmitting S105 the formed dataset to the AHBC unit so to control the illumination of the space in front of the vehicle based on the formed dataset so to avoid casting high beam illumination towards road users detected within the 3D-ROI.

In some embodiments, the formed S104 dataset comprises the 3D-ROI and the perception data indicative of one or more detected road users in the surrounding environment of the vehicle.

In some embodiments, the method S100 further comprises obtaining S109 vehicle-to-vehicle (V2V) data from one or more other vehicles located in an occluded area of the surrounding environment of the vehicle, wherein the V2V data comprises information about a position of the one or more other vehicles. Accordingly, the formed S104 dataset may further comprise the positions of the one or more other vehicles, i.e. occluded vehicles. An "occluded area" may for example an area in which vehicles that reside in that area cannot be detected/perceived by the ego-vehicle's sensors due to occlusions (e.g. other structures such as trees, walls, trees, or other vehicles). Thereby, the AHBC unit can be made aware of "hidden" road users and control the headlights of the vehicle so to not blind these hidden road users once they appear in front of the ego-vehicle.

In some embodiments, the method S100 further comprises processing S110 at least a portion of the perception data and the 3D road model by means of a trained machine-learning algorithm that is trained to identify approaching but currently occluded road users based on the perception data and the 3D road model and to generate a network output comprising information about the positions of any occluded road users. Accordingly, the formed 104 dataset may further comprise the position of the occluded road users as output by the trained machine-learning algorithm (i.e. the formed S104 dataset may further comprise the network output). The trained machine-learning algorithm may for example be trained to determine a position of approaching but currently occluded road users based on light beams appearing in front of the vehicle and derive a position of the road users emitting those light beams. In more detail, the machine-learning algorithm may be trained to derive a position of approaching but currently occluded road users by utilizing the knowledge of the 3D road model and an illumination appearing in front of the ego-vehicle.

The machine-learning algorithm (may also be referred to as machine-learning model, neural network, and so forth) is implemented in some embodiments using publicly available suitable software development machine learning code elements, for example, such as those which are available in PyTorch, Keras and TensorFlow or in any other suitable software development platform, in any manner known to be suitable to someone of ordinary skill in the art.

Further, in some embodiments, the perception data comprises one or more sensor-specific datasets associated with a corresponding sensor of the vehicle, each sensor-specific datasets having a corresponding sensor-specific measurement space. Accordingly, the step of forming S104 the dataset may further comprise transforming S106 the 3D-ROI to each sensor-specific measurement space so that the formed dataset comprises one or more transformed 3D-ROI datasets, and forming S107 one or more binary masks. The binary masks may be formed by forming S107 a binary mask based on a corresponding transformed 3D-ROI, for each sensor-specific dataset, where each binary mask indicates the 3D-ROI in the sensor-specific measurement space of a corresponding sensor-specific dataset. In more detail, the binary masks may effectively be used to mask (or remove) sensor data outside of the 3D-ROI in the corresponding sensor-specific datasets.

In some embodiments, the transmitting S105 of the formed S104 dataset comprises transmitting the one or more sensor-specific datasets together with the formed one or more binary masks to the AHBC unit. Thereby, the AHBC unit may employ the formed S107 binary masks to remove any detections in the perception data outside of the 3D-ROI in an efficient manner, and more accurately control the illumination of the space in front of the vehicle based on the formed dataset so to avoid casting high beam illumination towards road users detected within the 3D-ROI. By forming S107 the binary masks and using the formed binary masks on the perception data, the risk of "false positives" in the detection/extracting of "relevant" road users for the purpose of controlling the illumination of the space in front of the vehicle is reduced.

The one or more sensor-specific datasets may be selected from the group comprising camera image data, RADAR data, and LIDAR data. In other words, the one or more sensor-specific datasets may comprise camera image data, RADAR data, and/or LIDAR data.

Thus, in some embodiments, the perception data comprises camera image data obtained from a camera of the vehicle, the camera image data having a Two-Dimensional (2D) measurement space defined by a 2D image coordinate system of the camera. Accordingly, the step of forming S104 the dataset may comprise transforming S106 the 3D-ROI to the 2D measurement space of the camera image data, and forming S107 a 2D binary mask for the camera image data. The 2D binary mask indicates the 3D-ROI in the 2D measurement space of the camera image data.

In some embodiments, the perception data comprises RADAR data and/or LIDAR data, wherein each of the RADAR data and the LIDAR data has a 3D measurement space defined by a 3D coordinate system in reference to the vehicle. Thus, the step of forming S104 the dataset may comprise transforming S106 the 3D-ROI to the 3D measurement space of the RADAR data and/or the LIDAR data, and forming S107 a 3D binary mask for the RADAR data and/or the LIDAR data. The 3D binary mask indicates the 3D-ROI in the 3D measurement space of the RADAR data and/or the LIDAR data.

Further, in some embodiments, the step of forming S104 the dataset further comprises filtering S108 the perception data based on the formed one or more binary masks so to remove any detections in the perception data outside of the 3D-ROI. Accordingly, the step of transmitting S105 the formed dataset may comprise transmitting the filtered perception data to the AHBC unit. In some embodiments, only the filtered perception data is transmitted to the AHBC unit instead of the 3D-ROI and the (original) perception data. Thus, the step of transmitting S105 the formed dataset may comprise transmitting the filtered perception data, and optionally the position of the one or more other vehicles located in an occluded area and/or the positions of any occluded road users as indicated in the network output from the trained machine-learning algorithm to the AHBC unit.

In some embodiments, the method S100 further comprises processing S111 the formed dataset by means of the AHBC unit in order to output data comprising information about an illumination level and direction to be set for each of the one or more headlights of the vehicle so to avoid casting high beam illumination towards road users detected within the 3D-ROI. The method S100 may further comprise controlling S112 the illumination level and direction of the one or more headlights of the vehicle in accordance with the output data from the AHBC unit. As mentioned in the foregoing, Fig. 4 is a schematic illustration of the resulting illumination output by the ego-vehicle's 1 headlights, where the AHBC unit controls the headlights so to avoid casting high beam illumination toward a road user within the 3D-ROI (i.e. a relevant road user) in accordance with some embodiments. In other words, in some embodiments, all of the method steps may be performed by the AHBC unit or a unit or function dedicated to the AHBC unit.

In some embodiments, the method S100 further comprises processing S111 the formed dataset by means of the AHBC unit in order to output data comprising information about an illumination level to be set for each of a plurality of Light Emitting Diode (LED) pixels of the one or more headlights of the vehicle so to avoid casting high beam illumination towards road users detected within the 3D-ROI. The method S100 may further comprise controlling S112 the illumination level of the plurality of LED pixels of the one or more headlights of the vehicle in accordance with the output data from the AHBC unit.

Executable instructions for performing these functions or method steps are, optionally, included in a non-transitory computer-readable storage medium or other computer program product configured for execution by one or more processors.

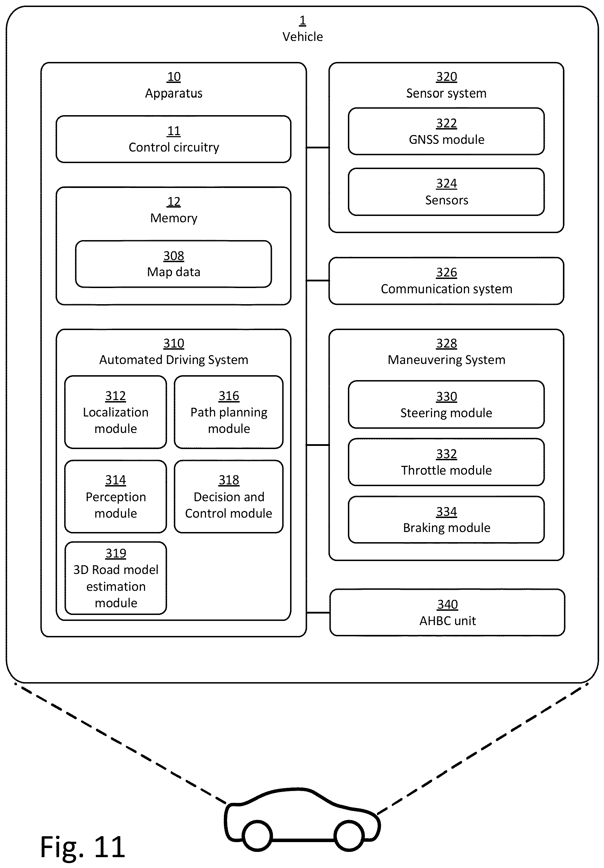

Fig. 11 is a schematic illustration of a vehicle 1 comprising an apparatus 10 for adaptive high beam control for the vehicle. As used herein, a "vehicle" is any form of motorized transport. For example, the vehicle 1 may be any road vehicle such as a car (as illustrated herein), a motorcycle, a (cargo) truck, a bus, etc.

The apparatus 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the Automated Driving System, ADS 310). Moreover, the apparatus 10 may form a part of the ADS 310, i.e. the apparatus 10 may be implemented as a module or feature of the ADS. The term "ADS" as used herein is to be understood as an Advanced Driver Assistance System (ADAS) or an Autonomous Driving (AD) system. Thus, "ADS" as used herein may comprise one or more features or functions of any level 0-5 according to SAE J3016 levels of driving automation for on-road vehicles.

Moreover, in some embodiments, the apparatus 10 forms a part of the AHBC unit 340. The control circuitry 11 may comprise one or more processors, such as a central processing unit (CPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. It is contemplated that the memory 12, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 310 or any other system of the vehicle 1. In other words, according to some embodiments, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles (i.e. AD or ADAS vehicles). It will be understood that the vehicle 1 can have any combination of the various elements shown in Fig. 11. Moreover, the vehicle 1 may comprise further elements than those shown in Fig. 11. While the various elements are herein shown as located inside the vehicle 1, one or more of the elements can be located externally to the vehicle 1. For example, the map data 308 may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 11 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 318 may communicate using one or more communication technologies. The communication system 318 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 320. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324 and/or map data 308 to determine and/or monitor a pose of the vehicle. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320. In the context of the present disclosure, the output from the perception module 314 may be the herein referred "perception data".

The localization module 312 and/or the perception module 314 may be communicatively connected to the sensor system 320 in order to receive sensory data from the sensor system 320. The localization module 312 and/or the perception module 314 may further transmit control instructions to the sensor system 320.

As mentioned, the vehicle 1 comprises an apparatus 10 for adaptive high beam control for the vehicle 1. The apparatus 10 comprises control circuitry 11 configured to obtain a pose of the vehicle 1. The pose accordingly indicates the vehicle's position and orientation on a road. The control circuitry is further configured to obtain a Three-Dimensional (3D) road model 201 of a surrounding environment of the vehicle 1 based on map data, such as e.g. High-Definition (HD) map data 308, and the determined vehicle pose. Further, the control circuitry 11 is configured to generate a 3D region of interest, 3D-ROI, 202 in the form of voxels 203 defining a volume along the obtained 3D road model 201.

The control circuitry 11 is further configured to form a dataset for processing by an Adaptive High Beam Control (AHBC) unit 340 configured to adaptively control an illumination of a space in front of the vehicle by controlling an illumination of one or more headlights of the vehicle 1. The formed dataset is based on the generated 3D-ROI 202 and perception data indicative of one or more detected road users 2 in the surrounding environment of the vehicle. Moreover, the perception data is based on sensor data obtained from one or more sensors 324 configured to monitor a surrounding environment of the vehicle 1. Moreover, the control circuitry 11 is configured to transmit the formed dataset to the AHBC unit 340 so to control the illumination of the space in front of the vehicle 1 based on the formed dataset so to avoid casting high beam illumination towards road users detected within the 3D-ROI 202.

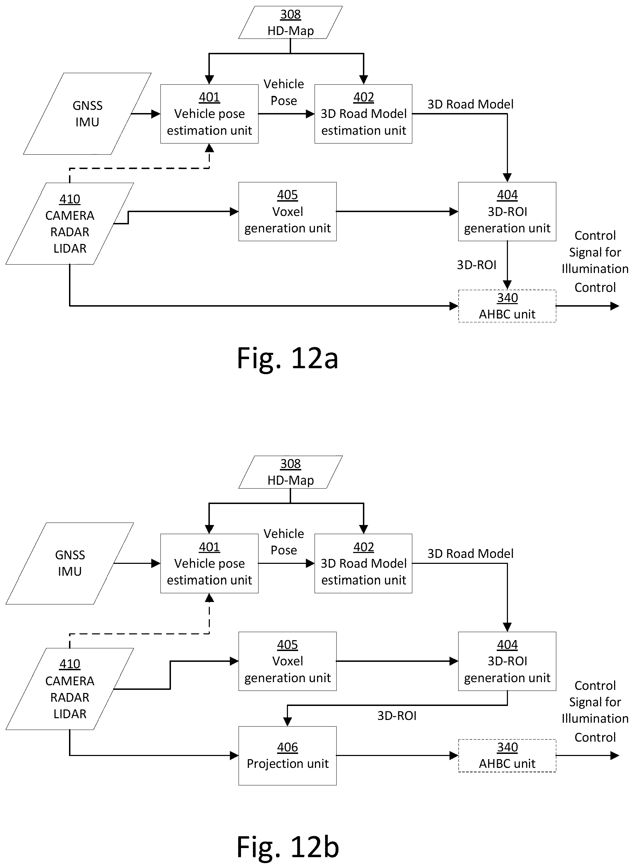

Figs. 12a-12c are schematic block diagram representations of an apparatus for adaptive high beam control for a vehicle in accordance with some embodiments. In other words, Figs. 12a-12c serve to further the herein disclosed technology by schematically illustrating the flow of information and the various process steps. Accordingly, the apparatus comprises control circuitry (e.g. one or more processors) configured to perform the functions of the methods disclosed herein, where the functions may be included in a non-transitory computer-readable storage medium or other computer program product configured for execution by the control circuitry. However, in order to better elucidate the embodiments, the control circuitry is represented as various "units" or blocks in Figs. 12a-12c, each of them linked to one or more specific functions of the control circuitry. In particular, Figs. 12a-12c each depict an example architecture of the apparatus.

Accordingly, Fig. 12a is a schematic block diagram representation of an apparatus for adaptive high beam control for a vehicle in accordance with some embodiments. In some embodiments, a pose of the vehicle is determined using a vehicle pose estimation unit 410 based on HD map data 308, GNSS data, and IMU data (i.e. the output from an Inertial Measurement Unit, IMU). The vehicle pose estimation unit 410 may also additionally, as an option, utilize perception data 410 in the form of camera images, RADAR data and/or LIDAR data to determine the vehicle pose. In particular, the vehicle pose estimation unit 410 outputs a vehicle pose on an HD map 308.

A 3D road model estimation unit 402 is configured to generate a 3D road model of a surrounding environment of the vehicle using the computed vehicle pose and HD map data 308. Further, a voxel generation unit 405 uses perception data 410 such as e.g. camera images, RADAR output and/or LIDAR output to generate a set of voxels. The set of voxels are fed to a 3D-ROI generation unit 404 that uses the generated voxels and the 3D road model to generate a 3D-ROI in the form of voxels defining a volume along the 3D rod model. Further, perception data in the form of camera images depicting one or more detected objects or light sources, detected camera blockages (e.g. occluded areas), RADAR data indicative of detected objects, and/or LIDAR data indicative of detected objects together with the 3D-ROI are fed to the AHBC unit 340.

Fig. 12b is a schematic block diagram representation of an apparatus for adaptive high beam control for a vehicle in accordance with some embodiments. In contrast to the embodiment depicted in Fig. 12a, the architecture of Fig. 12b further comprises a projection unit 406. In other words, an additional projection process is performed as compared to the process steps in Fig. 12a. In more detail, the projection unit 406 is configured to transform the 3D-ROI to each sensor-specific measurement space of the perception data 410. For example, if the perception data 410 comprises camera image data (i.e. one or more camera images) to be fed to the AHBC unit 340, the 3D-ROI is then projected to a 2D measurement space defined by a 2D image coordinate system of the associated camera. Then, a binary mask is created for the 3D-ROI, effectively indicating the 3D-ROI in the 2D measurement space of the camera image. In other words, the binary mask may be used to mask (or remove) any portions of the images that are outside of the 3D-ROI. The generated binary masks and the 3D ROI may then be provided as an input to the AHBC unit.

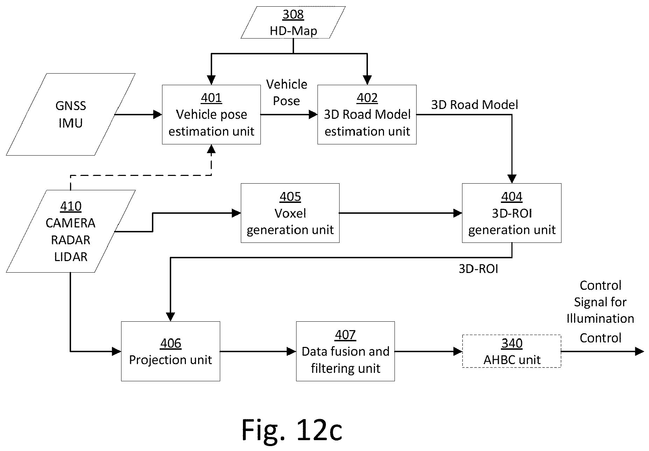

Fig. 12c is a schematic block diagram representation of an apparatus for adaptive high beam control for a vehicle in accordance with some embodiments. In contrast to the embodiment depicted in Fig. 12b, the architecture of Fig. 12b further comprises a data fusion and filtering unit 407. In short, the data fusion and filtering unit 407 further filters the data before it is transmitted/fed to the AHBC unit by fusing the binary masks with the corresponding sensor-specific datasets of the perception data 410, and then feeds (only) the filtered data to the AHBC unit 340.

The present invention has been presented above with reference to specific embodiments. However, other embodiments than the above described are possible and within the scope of the invention. Different method steps than those described above, performing the method by hardware or software, may be provided within the scope of the invention. Thus, according to some embodiments embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s)/control circuitry 11 (associated with the apparatus 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description.

According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

Accordingly, it should be understood that parts of the described solution may be implemented either in the vehicle 1, in a system located external the vehicle 1, or in a combination of internal and external the vehicle; for instance in a server in communication with the vehicle, a so called cloud solution. For instance, the vehicle pose and perception data may be sent to an external system and that system performs the steps to generate the 3D-ROI. The different features and steps of the embodiments may be combined in other combinations than those described.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various obtaining steps, generating steps, forming steps, transforming steps, filtering steps, transmitting steps and processing steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A computer-implemented method (S100) for adaptive high beam control for a vehicle, the method comprising:
obtaining (S101) a pose of the vehicle, the pose being indicative of the vehicle's position and orientation on a road;
obtaining (S102) a Three-Dimensional (3D) road model of a surrounding environment of the vehicle based on map data and the determined vehicle pose;
generating (S103) a 3D region of interest (3D-ROI) in the form of voxels defining a volume along the obtained 3D road model;
forming (S104) a dataset for processing by an Adaptive High Beam Control (AHBC) unit configured to adaptively control an illumination of a space in front of the vehicle by controlling an illumination of one or more headlights of the vehicle, wherein the formed dataset is based on the generated 3D-ROI and perception data indicative of one or more detected road users in the surrounding environment of the vehicle;
wherein the perception data is based on sensor data obtained from one or more sensors for monitoring a surrounding environment of the vehicle;
transmitting (S105) the formed dataset to the AHBC unit so to control the illumination of the space in front of the vehicle based on the formed dataset so to avoid casting high beam illumination towards road users detected within the 3D-ROI.

2. The method (S100) according to claim 1, wherein the formed (S104) dataset comprises the 3D-ROI and the perception data indicative of one or more detected road users in the surrounding environment of the vehicle.

3. The method (S100) according to claim 1, wherein the perception data comprises one or more sensor-specific datasets associated with a corresponding sensor of the vehicle, each sensor-specific datasets having a corresponding sensor-specific measurement space, and wherein the step of forming (S104) the dataset comprises:
transforming (S106) the 3D-ROI to each sensor-specific measurement space so that the formed dataset comprises one or more transformed 3D-ROI datasets; and
forming (S107) one or more binary masks by:
for each sensor-specific dataset, forming (S107) a binary mask based on a corresponding transformed 3D-ROI, the binary mask indicating the 3D-ROI in the sensor-specific measurement space of a corresponding sensor-specific dataset.

4. The method (S100) according to claim 3, wherein the one or more sensor-specific datasets is selected from the group comprising camera image data, RADAR data, and LIDAR data.

5. The method (S100) according to claim 3 or 4, wherein the perception data comprises camera image data obtained from a camera of the vehicle, the camera image data having a Two-Dimensional (2D) measurement space defined by a 2D image coordinate system of the camera, and wherein the step of forming (S104) the dataset comprises:
transforming (S106) the 3D-ROI to the Two-Dimensional (2D) measurement space of the camera image data;
forming (S107) a 2D binary mask for the camera image data, the 2D binary mask indicating the 3D-ROI in the 2D measurement space of the camera image data.

6. The method (S100) according to any one of claims 3-5, wherein the perception data comprises RADAR data and/or LIDAR data, wherein each of the RADAR data and the LIDAR data has a 3D measurement space defined by a 3D coordinate system in reference to the vehicle, and wherein the step of forming (S104) the dataset comprises:
transforming (S106) the 3D-ROI to the 3D measurement space of the RADAR data and/or the LIDAR data;
forming (S107) a 3D binary mask for the RADAR data and/or the LIDAR data, the 3D binary mask indicating the 3D-ROI in the 3D measurement space of the RADAR data and/or the LIDAR data.

7. The method (S100) according to any one of claims 3-6, wherein the step of transmitting (S105) the formed dataset comprises:
transmitting the one or more sensor-specific datasets together with the formed one or more binary masks to the AHBC unit.

8. The method (S100) according to any one of claims 3-6, wherein the step of forming (S104) the dataset further comprises:
filtering (S108) the perception data based on the formed one or more binary masks so to remove any detections in the perception data outside of the 3D-ROI;
wherein the step of transmitting (S105) the formed dataset comprises transmitting the filtered perception data to the AHBC unit.

9. The method (S100) according to any one of claims 1-8, further comprising:
obtaining (S109) vehicle-to-vehicle (V2V) data from one or more other vehicles located in an occluded area of the surrounding environment of the vehicle, wherein the V2V data comprises information about a position of the one or more other vehicles;
wherein the formed (S104) dataset further comprises the positions of the one or more other vehicles.

10. The method (S100) according to any one of claims 1-9, further comprising:
processing (S110) at least a portion of the perception data and the 3D road model by means of a trained machine-learning algorithm that is trained to identify approaching but currently occluded road users based on the perception data and the 3D road model and to generate a network output comprising information about the positions of any occluded road users;
wherein the formed (S104) dataset further comprises the position of the occluded road users.

11. The method (S100) according to any one of claims 1-10, further comprising:
processing (S111) the formed dataset by means of the AHBC unit in order to output data comprising information about an illumination level and illumination direction to be set for each of the one or more headlights of the vehicle so to avoid casting high beam illumination towards road users detected within the 3D-ROI; and
controlling (S112) the illumination level and illumination direction of the one or more headlights of the vehicle in accordance with the output data from the AHBC unit.

12. A computer program product comprising instructions which, when the program is executed by a computing device of a vehicle, causes the computing device to carry out the method (S100) according to any one of claims 1-11.

13. A computer-readable storage medium comprising instructions which, when executed by a computing device of a vehicle, causes the computing device to carry out the method (S100) according to any one of claims 1-11.

14. An apparatus (10) for adaptive high beam control for a vehicle (1), the apparatus comprising control circuitry (11) configured to:
obtain a pose of the vehicle (1), the pose being indicative of the vehicle's position and orientation on a road;
obtain a Three-Dimensional (3D) road model (201) of a surrounding environment of the vehicle (1) based on map data (308) and the determined vehicle pose;
generate a 3D region of interest, 3D-ROI, (202) in the form of voxels (203) defining a volume along the obtained 3D road model (201);
form a dataset for processing by an Adaptive High Beam Control (AHBC) unit (340) configured to adaptively control an illumination of a space in front of the vehicle by controlling an illumination of one or more headlights of the vehicle (1), wherein the formed dataset is based on the generated 3D-ROI (202) and perception data indicative of one or more detected road users (2) in the surrounding environment of the vehicle;
wherein the perception data is based on sensor data obtained from one or more sensors (324) for monitoring a surrounding environment of the vehicle (1);
transmit the formed dataset to the AHBC unit so to control the illumination of the space in front of the vehicle based on the formed dataset so to avoid casting high beam illumination towards road users detected within the 3D-ROI (202).

15. A vehicle (1) comprising:
an apparatus (10) for adaptive high beam control for the vehicle (1) according to claim 14.
